# EUROPÄISCHE PATENTSCHRIFT

(11) **EP 1 449 682 B1**
(45) Veröffentlichungstag und Bekanntmachung des Hinweises auf die Patenterteilung: **25.10.2006**
(21) Anmeldenummer: 03003889.7
(22) Anmeldetag: 21.02.2003
(51) Int. Cl.: B60C 17/06, B60C 17/04

(54) **Fahrzeugrad mit einem Notlaufstützkörper**
Vehicle wheel with a run flat support
Roue de véhicule munie d'un appui de roulage de secours

(43) Veröffentlichungstag der Anmeldung: 25.08.2004
(73) Patentinhaber: Continental Aktiengesellschaft, 30165 Hannover (DE)
(72) Erfinder: Busche, Joachim, 30419 Hannover (DE); Kaiser, Silvia, 30659 Hannover (DE); Rubba, Heiko, 31303 Burgdorf (DE); Kurz, Martin, 30163 Hannover (DE); Winkler, Jens, 30173 Hannover (DE); Charpentier, Yoni, 30159 Hannover (DE); Reisdorf, Wolfgang, 4730 Hauset (BE)

(56) Entgegenhaltungen:
- DE-A- 19 707 090
- DE-C- 10 149 086

## Beschreibung

Die Erfindung betrifft ein Fahrzeugrad mit einem auf einer Radfelge befestigten Luftreifen und einem Notlaufstützkörper, der als schalenförmiger Ringkörper ausgebildet ist und sich mit seinen beiden axial äußeren Randbereichen über ringförmige Stützelemente auf der Radfelge abstützt.

Ein wesentlicher Nachteil von schlauchlosen Luftreifen ist das mögliche Auftreten einer Undichtigkeit, wodurch der Luftdruck im Reifen abfällt und der Reifen kollabiert. Bei einer hohen Fahrzeuggeschwindigkeit kann das plötzliche Entweichen der Luft im Reifen zu gefährlichen Situationen führen, in denen der Fahrer die Kontrolle über sein Fahrzeug verliert. Ferner kann der Reifen bei einem Druckverlust dadurch beschädigt werden, dass die Fahrzeugfelge sich in die Innenseele und darüber liegende Lagen einschneidet.

Für Luftreifen sind verschiedene Notlaufstützkörper-Systeme bekannt.

Die DE 197 07 090 A1 offenbart ein Fahrzeugrad mit einem innerhalb des Luftreifenhohlraumes auf der Felge abgestützten Notlaufstützkörper, der aus einem schalenförmigen Ringkörper gebildet wird. Der Notlaufstützkörper wird über ein oder mehrere Stützelemente auf der Felge abgestützt. Die Stützelemente gehen dabei in den schalenförmigen Ringkörper über und sind entweder ein Teil desselben oder bestehen aus einem im Vergleich zum schalenförmigen Ringkörper anderen Werkstoff.

In der DE 198 25 311 C1 ist ein anderes Notlaufstützkörpersystem offenbart, bei dem ein schalenförmiger Ringkörper innerhalb des Luftreifenhohlraumes angeordnet ist. Die beiden axial äußeren Randbereiche des Notlaufstützkörpers stützen sich über zwei elastische ringförmige Stützelemente auf der Felge ab. Die Stützelemente besitzen in radialer sowie axialer Richtung unterschiedliche Elastizitätskennwerte und sind mit dem metallischen Notlaufstützkörper stoffschlüssig verbunden.

Ein Nachteil der dargestellten Notlaufstützkörper besteht darin, dass sich der Notlaufstützkörper in bestimmten Notlaufsituationen als instabil erweist. Im Notlaufzustand wird die gesamte Fahrzeuglast zunächst auf den schalenförmigen Ringkörper und von dort auf die Stützelemente übertragen. Insbesondere bei Kurvenfahrten wirken außer den aus der Fahrzeuglast resultierenden Normalkräfte zusätzlich Axialkräfte auf die Stützelemente ein, die in einem ungünstigen Fall zum Einknicken der Stützelemente führen. Eine solche Instabilität der Stützelemente hat schließlich zur Folge, dass einer der Stützelemente ins Felgentiefbett abrutscht und dadurch die Funktionsfähigkeit des gesamten Notlaufstützkörpers wesentlich beeinträchtigt. Im ungünstigsten Fall lösen sich die Stützelemente vom Ringkörper ab, so dass eine Weiterfahrt nicht mehr möglich ist.

Der Erfindung liegt die Aufgabe zu Grunde, einen Notlaufstützkörper für einen Luftreifen zu schaffen, der im Notlaufzustand einen festen und sicheren Sitz des Notlaufstützkörpers auf der Felge gewährleistet.

Gelöst wird die Aufgabe gemäß den kennzeichnenden Merkmalen des Anspruchs 1 dadurch, dass der Neigungswinkel von mindestens einem Stützelement zwischen einer durch den Zentralpunkt verlaufenden Radiale und der Mittellinie des Stützelementes im Bereich zwischen 15° und 30° liegt.

Ein wesentlicher Vorteil der Erfindung ist insbesondere darin zu sehen, dass durch die angewinkelte Schrägstellung der Stützelemente der Notlaufstützkörper im Notlaufzustand fest gegen die Felge und die Reifenwülste gepresst wird. Insbesondere bei Kurvenfahrten im Notlaufzustand kann in Folge der schräggestellten Stützelemente kein Abknicken der Stützelemente mehr eintreten. Die bei einer Kurvenfahrt auftretenden Axialkräfte werden hingegen sicher von den Stützelementen aufgenommen und bewirken zudem eine feste Einspannung des Reifenwulstes zwischen Felgenhorn und entsprechendem Stützelement. Auf diese Weise kann für die gesamte Notlaufstrecke die volle Funktionsfähigkeit des Notlaufstützkörpers gewährleistet werden.

In einer vorteilhaften Weiterbildung der Erfindung ist vorgesehen, dass der Neigungswinkel von mindestens einem Stützelement im unmontierten Zustand größer ist als im auf der Felge montierten Zustand. Auf diese Weise werden die Stützelemente mit einer axialen Vorspannung auf der Felge montiert. Die Stützelemente drücken dadurch im montierten Zustand mit einer axialen Kraftkomponente seitlich gegen die Reifenwülste und gewährleisten somit im normalen Betriebszustand des Reifens einen sicheren Sitz des Notlaufstützkörpers auf der Felge. Der feste Sitz des Notlaufstützkörpers auf der Felge verbessert u. a. den Rundlauf des gesamten Fahrzeugrades.

In einer weiteren vorteilhaften Weiterbildung der Erfindung ist vorgesehen, dass der Innendurchmesser von mindestens einem Stützelement im unmontierten Zustand kleiner ist als im auf der Felge montierten Zustand. Auf diese Weise werden die Stützelemente mit einer radialen Vorspannung auf der Felge montiert, wodurch der feste Sitz des Notlaufstützkörpers auf der Felge zusätzlich erhöht wird.

In einer weiteren vorteilhaften Weiterbildung der Erfindung ist vorgesehen, dass die schmalste Wanddicke von mindestens einem Stützelement mindestens 15 mm beträgt. Durch eine solche Mindestwanddicke wird sichergestellt, dass das Stützelement im Notlaufzustand nicht einknickt oder einbeult.

In einer weiteren vorteilhaften Weiterbildung der Erfindung ist vorgesehen, dass die radiale Höhenabmessung von mindestens einem Stützelement größer als 30 mm ist. Eine solche radiale Mindesthöhenabmessung besitzt den Vorteil, dass das Fahrzeugrad auch im Notlaufzustand einen hohen Federungskomfort besitzt.

In einer weiteren vorteilhaften Weiterbildung der Erfindung ist vorgesehen, dass die Wanddicke von mindestens einem Stützelement in der mittleren radialen Höhe des Stützelementes größer ist als an den radialen Endbereichen. Insbesondere in der mittleren radialen Höhe des Stützelementes ist die Gefahr des Einknickens der Stützelemente am größten. Durch die verstärkte Wanddicke in diesem Bereich des Stützelementes wird die Stabilität des Stützelementes wesentlich erhöht.

In einer weiteren vorteilhaften Weiterbildung der Erfindung ist vorgesehen, dass mindestens ein Stützelement aus einem Kautschukmaterial besteht. Die aus Kautschukmaterial bestehenden Stützelemente verleihen dem Fahrzeugrad im Notlaufzustand hohe Federungs- und Dämpfungseigenschaften.

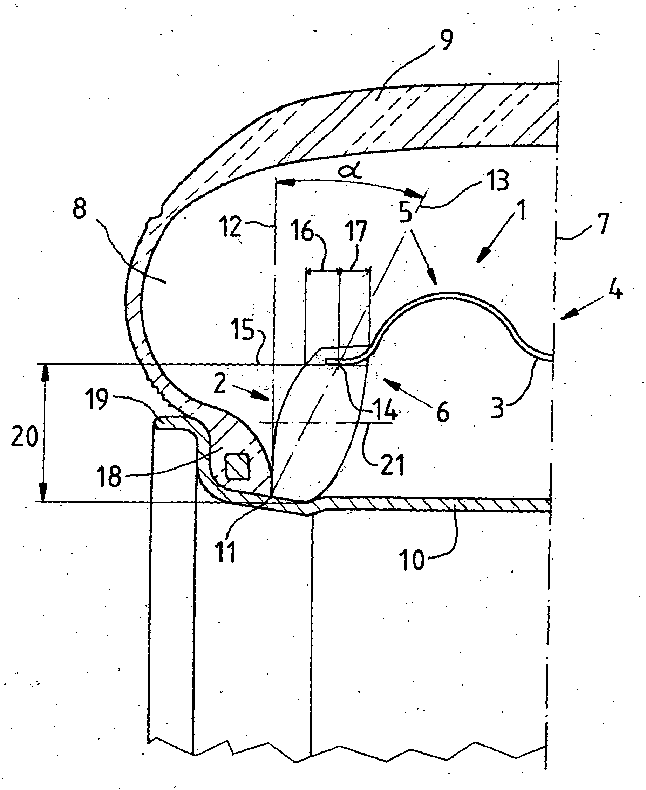

Anhand eines Ausführungsbeispiels soll die Erfindung näher erläutert werden. Die einzige Figur zeigt einen im Reifenhohlraum 8 auf der Felge 10 montierten erfindungsgemäßen Notlaufstützkörper 1. Es handelt sich bei der Figur um eine Radialschnittansicht im Reifen 9, wobei zur vereinfachten Darstellung nur die linke Häfte der Notlaufstützkörperanordnung dargestellt ist. Der rotationssymmetrische Notlaufstützkörper 1 ist achsensymmetrisch zur axialen Mittelachse 7 des Reifens 9 und setzt sich aus dem schalenförmigen Ringkörper 3 sowie dem Stützelement 2 zusammen. Der Ringkörper 3 besitzt eine radiale Einschnürung 4 sowie eine nach radial außen gekrümmte Wölbung 5. Im Verbindungsbereich 6 ist der Ringkörper 3 stoffschlüssig an das Stützelement 2 angebunden. Im Berührungspunkt der Felge 10, des Reifens 9 und des Stützelementes 2 liegt ein Zentralpunkt 11, der für die Bestimmung des Neigungswinkels α des Stützelementes 2 eine zentrale Bedeutung besitzt. Durch den Zentralpunkt 11 verläuft eine Radiale 12, die senkrecht zu der in der Figur nicht dargestellten Reifenachse steht. Die zweite wichtige Bezugslinie ist Mittellinie 13 des Stützelementes 2, mit der der Neigungswinkel α festgelegt wird. Die Mittellinie 13 verläuft zum einen durch den Zentralpunkt 11 und zum anderen durch die Wanddickenmitte 14 des Stützelementes 2 im Verbindungsbereich 6 zum Ringkörper 2. Bei diesem Ausführungsbeispiel liegt die Wanddickenmitte auf der Bezugslinie 15, wobei der halbe Wanddickenabstand 16 und 17 jeweils gleich groß sind. Der Neigungswinkel α des Stützelementes 2 liegt im Bereich von 15 bis 30°, vorzugsweise zwischen 22 und 26°, wobei das Optimum bei etwa 24° liegt. Durch den erfindungswesentlichen Neigungswinkel α wird der entscheidende Vorteil erzielt, dass der Notlaufstützkörper fest auf der Felge sitzt und das Stützelement 2 im Notlaufzustand nicht in das Felgentiefbett abrutschen kann. Vorteilhafterweise besitzen beide Stützelemente den gleichen Neigungswinkel α. Durch den schräg zu Radialen 12 angestellten Neigungswinkel α wird im Notlaufzustand das Stützelement fest gegen die Felge 10 sowie gegen den Reifenwulst 18 gedrückt, der dadurch ebenfalls gegen ein Abrutschen in das Felgentiefbett abgesichert ist. Durch die im Notlaufzustand auf das Stützelement 2 einwirkenden Kräfte wird der Reifenwulst 18 fest zwischen dem Felgenhorn 19 und dem Stützelement 2 eingespannt. Die feste und sichere Einspannung von Reifenwulst 18 und Stützelement 2 ist ebenfalls bei Kurvenfahrten im Notlaufzustand in einem hohen Maße gewährleistet. Bei dem in der Figur dargestellten Ausführungsbeispiel, beispielsweise für eine 19-Zoll-Felge beträgt die Wanddicke in Höhe der Bezugslinie 15 in etwa 22 mm. In der mittleren radialen Höhe 21 des Stützelementes 2 ist die Wanddicke größer als an den radialen Endbereichen im Verbindungsbereich zur Felge 10 und im Verbindungsbereich 6. Auf diese Weise ist das Stützelement zusätzlich gegen einen Knickeffekt geschützt. Die radiale Höhenabmessungen 20 des Stützelementes 2 ist der Abstand zwischen dem Innendurchmessers des Stützelementes 2 und der Bezugslinie 15, wobei bei einer 19-Zoll-Felge diese Höhe in etwa zwischen 30 und 50 mm, vorzugsweise in etwa 35 mm beträgt. Durch eine solche Höhenabmessung des Stützelementes besitzt das Fahrzeugrad im Notlaufzustand optimale Federungseigenschaften.

### Bezugszeichenliste

### (ist Teil der Beschreibung)

- 1: Notlaufstützkörper
- 2: Stützelement
- 3: Ringkörper
- 4: radiale Einschnürung des Ringkörpers
- 5: nach radial außen gekrümmte Wölbungen des Ringkörpers
- 6: Verbindungsbereich zwischen Ringkörper und Stützelement
- 7: axiale Mittelachse
- 8: Reifenhohlraum
- 9: Luftreifen
- 10: Fahrzeugfelge
- 11: Zentralpunkt von Felge, Reifen und Sützelement
- 12: Radiale, die durch den Zentralpunkt verläuft
- 13: Mittellinie der Stützelemente
- 14: Wanddickenmitte im Verbindungsbereich
- 15: Bezugslinie
- 16: linker halber Wanddickenabstand
- 17: rechter halber Wanddickenabstand
- 18: Reifenwulst
- 19: Felgenhorn
- 20: radiale Höhenabmessung des Stützelementes
- 21: mittlere radiale Höhe des Stützelementes

- α: Neigungswinkel des Stützelementes

## Patentansprüche

1. Fahrzeugrad mit einem auf einer Radfelge (10) befestigten Luftreifen (9) und einem Notlaufstützkörper (1), der als schalenförmiger Ringkörper (3) ausgebildet ist und sich mit seinen beiden axial äußeren Randbereichen über ringförmige Stützelemente (2) auf der Radfelge (10) abstützt,
wobei ein Zentralpunkt (11) durch den Berührungspunkt zwischen Reifen (9), Felge (10) sowie Stützelement (2) gebildet wird und eine Mittellinie (13) des Stützelementes (2) durch den Zentralpunkt (11) sowie die Wanddickenmitte (14) des Stützelementes (2) im Verbindungsbereich (6) zum schalenförmigen Ringkörper (3) verläuft,
**dadurch gekennzeichnet, dass**
der Neigungswinkel (α) von mindestens einem Stützelement (2) zwischen einer durch den Zentralpunkt (11) verlaufenden Radiale (12) und der Mittellinie (13) des Stützelementes (2) im Bereich zwischen 15° und 30° liegt.

2. Fahrzeugrad nach Anspruch 1,
**dadurch gekennzeichnet, dass**
der Neigungswinkel (α) im Bereich zwischen 22° und 26° liegt.

3. Fahrzeugrad nach Anspruch 1 oder 2,
der Neigungswinkel (α) von mindestens einem Stützelement (2) im unmontierten Zustand größer ist als im auf der Felge (10) montierten Zustand.

4. Fahrzeugrad nach einem der Ansprüche 1 bis 3,
**dadurch gekennzeichnet, dass**
der Innendurchmesser von mindestens einem Stützelement (2) im unmontierten Zustand kleiner ist als im auf der Felge (10) montierten Zustand.

5. Fahrzeugrad nach einem der Ansprüche 1 bis 4,
**dadurch gekennzeichnet, dass**
die schmalste Wanddicke von mindestens einem Stützelement (2) mindestens 15 mm beträgt.

6. Fahrzeugrad nach einem der Ansprüche 1 bis 5,
**dadurch gekennzeichnet, dass**
die radiale Höhenabmessung (20) von mindestens einem Stützelement (2) größer als 30 mm ist.

7. Fahrzeugrad nach einem der Ansprüche 1 bis 6,
**dadurch gekennzeichnet, dass**
das die Wanddicke von mindestens einem Stützelement (2) in der mittleren radialen Höhe (21) des Stützelementes (2) größer ist als an den radialen Endbereichen.

8. Fahrzeugrad nach einem der Ansprüche 1 bis 7,
**dadurch gekennzeichnet, dass**
mindestens ein Stützelement (2) aus einem Kautschukmaterial besteht.

## Claims

1. Vehicle wheel comprising a tyre (9), fastened on a wheel rim (10), and a run-flat support body (1), which is configured as a shell-shaped annular body (3) and is supported on the wheel rim (10), with its two axially outer marginal regions, by means of annular supporting elements (2),
a central point (11) being formed by the contact point between tyre (9), rim (10) and supporting element (2), and a centre line (13) of the supporting element (2) running through the central point (11) and the wall thickness middle (14) of the supporting element (2) in the connecting region (6) to the shell-shaped annular body (3),
**characterized in that** the angle of inclination (α) of at least one supporting element (2) between a radial (12) running through the central point (11) and the centre line (13) of the supporting element (2) lies within the range between 15° and 30°.

2. Vehicle wheel according to Claim 1, **characterized in that** the angle of inclination (α) lies within the range between 22° and 26°.

3. Vehicle wheel according to Claim 1 or 2, **characterized in that** the angle of inclination (α) of at least one supporting element (2) is greater in the unmounted state than in the state mounted on the rim (10).

4. Vehicle wheel according to one of Claims 1 to 3, **characterized in that** the inner diameter of at least one supporting element (2) is less in the unmounted state than in the state mounted on the rim (10).

5. Vehicle wheel according to one of Claims 1 to 4, **characterized in that** the narrowest wall thickness of at least one supporting element (2) measures at least 15 mm.

6. Vehicle wheel according to one of Claims 1 to 5, **characterized in that** the radial vertical dimension (20) of at least one supporting element (2) is greater than 30 mm.

7. Vehicle wheel according to one of Claims 1 to 6, **characterized in that** the wall thickness of at least one supporting element (2) is greater at the mid radial height (21) of the supporting element (2) than at the radial end regions.

8. Vehicle wheel according to one of Claims 1 to 7, **characterized in that** at least one supporting element (2) consists of a rubber material.

## Revendications

1. Roue de véhicule avec un pneumatique (9) fixé sur une jante de roue (10) et un corps d'appui de secours (1) qui est réalisé sous forme de coque (3) et qui s'appuie sur la jante de roue (10) avec ses deux régions de bord axialement extérieures par le biais d'éléments de support annulaires (2),
dans laquelle un point central (11) est formé par le point de contact entre le pneumatique (9), la jante (10) ainsi que les éléments de support (2) et un axe médian (13) de l'élément de support (2) s'étend à travers le point central (11) ainsi que le centre de l'épaisseur de la paroi (14) de l'élément de support (2) dans la région de connexion (6) au corps annulaire en forme de coque (3),
**caractérisée en ce que**
l'angle d'inclinaison (α) d'au moins un élément de support (2) est compris entre une radiale (12) passant par le point central (11) et l'axe médian (13) de l'élément de support (2) dans une plage de 15° à 30°.

2. Roue de véhicule selon la revendication 1,
**caractérisée en ce que**
l'angle d'inclinaison (α) est compris dans la plage de 22° à 26°.

3. Roue de véhicule selon la revendication 1 ou 2,
**caractérisée en ce que**
l'angle d'inclinaison (α) d'au moins un élément de support (2) dans l'état non monté est plus grand que dans l'état monté sur la jante (10).

4. Roue de véhicule selon l'une quelconque des revendications 1 à 3,
**caractérisée en ce que**
le diamètre intérieur d'au moins un élément de support (2) dans l'état non monté est plus petit que dans l'état monté sur la jante (10).

5. Roue de véhicule selon l'une quelconque des revendications 1 à 4,
**caractérisée en ce que**
l'épaisseur de paroi la plus étroite d'au moins un élément de support (2) vaut au moins 15 mm.

6. Roue de véhicule selon l'une quelconque des revendications 1 à 5,
**caractérisée en ce que**
la dimension radiale en hauteur (20) d'au moins un élément de support (2) est supérieure à 30 mm.

7. Roue de véhicule selon l'une quelconque des revendications 1 à 6,
**caractérisée en ce que**
l'épaisseur de paroi d'au moins un élément de support (2) au niveau de la hauteur radiale centrale (21) de l'élément de support (2) est plus grande qu'au niveau des régions d'extrémité radiales.

8. Roue de véhicule selon l'une quelconque des revendications 1 à 7,
**caractérisée en ce**
**qu'**au moins un élément de support (2) se compose d'un matériau en caoutchouc.
